# FASCICULE DE BREVET EUROPEEN

(11) **EP 1 984 605 B1**
(45) Date de publication et mention de la délivrance du brevet: **29.12.2010**
(21) Numéro de dépôt: 07731636.2
(22) Date de dépôt: 16.02.2007
(51) Int. Cl.: F01N 3/025, F01N 11/00, F01N 3/035

(54) **PROCEDE ET DISPOSITIF DE PURGE D'UN INJECTEUR D'UN SYSTEME D'INJECTION DE CARBURANT D'AIDE A LA REGENERATION D'UN FILTRE A PARTICULES**
VERFAHREN UND VORRICHTUNG ZUM REINIGEN EINES EINSPRITZVENTILS IN EINEM KRAFTSTOFFEINSPRITZSYSTEM ZUR VERWENDUNG BEI DER REGENERIERUNG EINES PARTIKELFILTERS
METHOD AND DEVICE FOR PURGING AN INJECTOR IN A FUEL INJECTOR SYSTEM OF USE IN THE REGENERATION OF A PARTICLE FILTER

(30) Priorité: 17.02.2006 FR 0601411
(43) Date de publication de la demande: 29.10.2008
(73) Titulaire: Renault SAS, 92100 Boulogne Billancourt (FR)
(72) Inventeur: COLET, François, F-92700 Colombes (FR); ROTH, Richard, F-92000 Nanterre (FR); LOUREIRO NIETO, Gustavo, F-92500 Rueil Malmaison (FR); PALANQUE, Nicolas, F-94300 Vincennes (FR); LE GARFF, Laurent, F-91220 Bretigny sur Orge (FR)
(74) Mandataire: Religieux, Vincent
(86) Numéro de dépôt international: PCT/FR2007/050811
(87) Numéro de publication internationale: WO 2007/093749

(56) Documents cités:
- US-A- 5 193 340
- US-A1- 2004 226 288
- US-A1- 2005 103 099
- US-A1- 2005 210 869

## Description

### DOMAINE TECHNIQUE

L'invention concerne un procédé et un dispositif de purge d'un injecteur d'un système d'injection de carburant d'aide à la génération d'un filtre à particules.

Les normes européennes anti-pollution devenant de plus en plus sévères, il est important pour les constructeurs automobiles de réduire les émissions polluantes de leur moteur. Aujourd'hui, les restrictions concernent non seulement les oxydes d'azote (NOₓ), mais aussi les particules émises, appelées fumées noires qui peuvent être à l'origine de certaines maladies respiratoires et de certains cancers d'après les dernières études médicales. Ainsi, afin de limiter les émissions de ces fumées noires en piégeant les particules, différents filtres nommés filtres à particules (FAP), intégrables dans la ligne d'échappement du véhicule sont étudiés et développés par les constructeurs.

Toutefois, l'un des problèmes techniques à résoudre n'est pas seulement la capture des particules mais aussi leurs élimination afin d'éviter le colmatage du filtre. Différentes méthodes de régénération peuvent être employées comme par exemple une régénération dite naturelle sur les zones de fonctionnement moteur à fort régime et à forte charge. D'autres méthodes consistent à amorcer la régénération du filtre en effectuant des injections retardées ou des post-injection pendant la course de détente du moteur. Toutefois l'utilisation de la post-injection.notamment à faible charge, provoque une dilution de l'huile du moteur par le gasoil non brûlé passant entre les segments du piston et les parois du cylindre. Ce qui peut fortement altérer le bon fonctionnement du moteur.

Afin de pallier à cet inconvénient, il est connu d'utiliser une autre méthode consistant à injecter du gasoil directement dans les gaz d'échappement à l'aide d'un injecteur implanté sur la ligne d'échappement. Les documents US 2005/0210869, US 2005/0103099, FR 2 853 006 et US 2004/0226 288 décrivent des systèmes de ce type.

Toutefois, ces systèmes présentent de multiples inconvénients :
- le vieillissement du gasoil dans le circuit d'injection peut entraîner la formation de particules ou de résidus bouchant l'injecteur ;
- l'évaporation du gasoil en sortie d'injecteur peut provoquer son encrassement en cas de présence d'insolubles dans celui-ci ;
- le vieillissement thermique du gasoil peut altérer sa capacité d'auto-imflammation mesurée par son indice de cétane et par conséquent la régénération du filtre à particules ;
- une accumulation de dépôts dus au gaz d'échappement peut se produire sous le nez de l'injecteur entre les phases de non utilisation.

La présente invention a précisément pour objet un procédé de purge d'un injecteur d'un système d'injection de carburant d'aide à la régénération d'un filtre à particules qui remédie à ces inconvénients. Ces buts sont atteints par le fait que :
- on détermine le vieillissement du carburant, on le compare à une valeur de seuil de vieillissement de carburant et on active une demande de purge si cette valeur de seuil est dépassée ;
- lorsque la demande de purge est activée, on vérifie que des conditions d'activation de la purge sont satisfaites et, si elles le sont, on active la purge ;
- on poursuit la purge tant que ces conditions sont satisfaites jusqu'à ce que la quantité de carburant purgé atteigne une quantité de carburant à purger.

De préférence, on détermine un compteur de vieillissement du carburant à l'étape N en multipliant un facteur de vieillissement fonction de variables de vieillissement par un temps de vieillissement et en ajoutant le résultat obtenu au compteur de vieillissement à l'étape N-1.

Avantageusement les variables de vieillissement sont la température de l'eau et la température des gaz d'échappement à l'entrée d'un catalyseur disposé en amont du filtre à particules.

De préférence, les conditions d'activation de la purge sont, outre le fait que la demande de purge est activée, le fait que le mode de régénération du filtre à particules n'est pas actif, le fait que la température des gaz à l'entrée du filtre à particules est supérieure à une valeur de seuil (T1) et le fait que le débit d'air des gaz d'échappement est inférieur à un débit de seuil (Q1).

Dans le cas où la purge est interrompue par une régénération du filtre à particules (10), la quantité de carburant (Qrégé) utilisée pour la régénération est considérée comme participant à la purge.

Par ailleurs, l'invention concerne un système d'injection d'aide à la régénération d'un filtre à particules comprenant :
- un moteur ;
- une ligne d'échappement sur laquelle sont disposés dans cet ordre, à partir du moteur, un premier catalyseur d'oxydation, un second catalyseur d'oxydation et un filtre à particules ; et
- un injecteur d'aide à la régénération du filtre à particules
**caractérisé en ce que** l'injecteur d'aide à la régénération du filtre à particules est disposé entre le premier catalyseur d'oxydation et le second catalyseur d'oxydation.

D'autres caractéristiques et avantages de l'invention apparaîtront encore à la lecture de la description qui suit d'exemples de réalisation donnés à titre illustratif en référence aux figures annexées. Sur ces figures :
- la figure 1 est une vue générale schématique d'un système d'injection d'aide à la régénération d'un filtre à particules dans lequel le procédé de l'invention est mis en oeuvre ;
- la figure 2 est un organigramme de l'estimation du temps de vieillissement de carburant ;
- la figure 3 représente un organigramme de gestion de la purge de carburant dans le procédé de l'invention ;
- la figure 4 est un organigramme de calcul du débit de purge et de l'arrêt de purge.

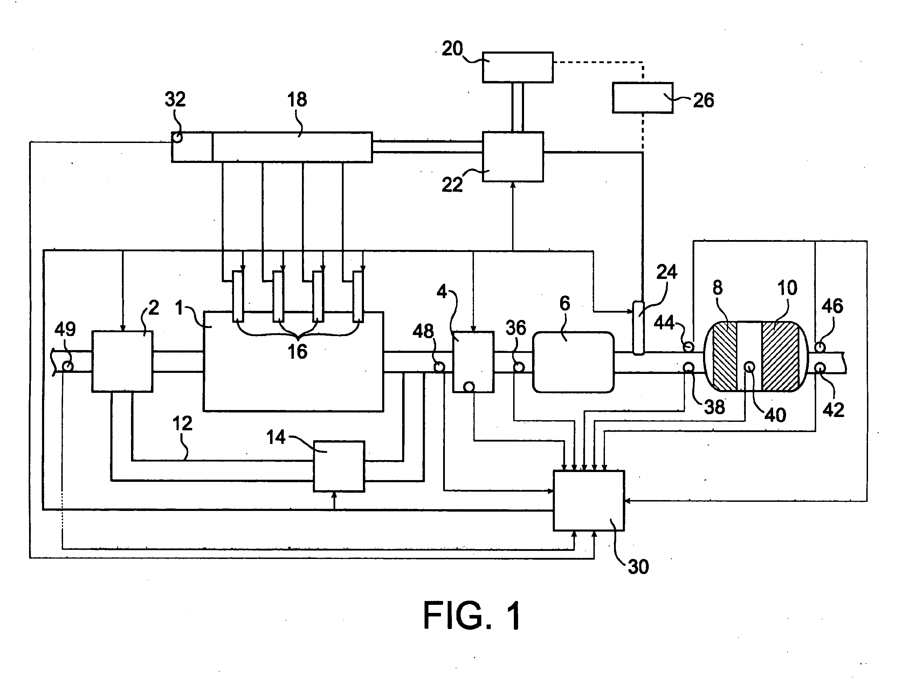

Sur la figure 1 la référence 1 désigne un moteur diesel représenté schématiquement. Sur la gauche de la figure le moteur diesel 1 est alimenté en air par des moyens d'admission d'air 2 représenté schématiquement, par exemple des tubulures d'admission d'air. A droite sur la figure le moteur diesel 1 comporte une ligne d'échappement sur laquelle sont montés respectivement et successivement un turbo compresseur 4, et un premier catalyseur d'oxydation 6, un second catalyseur d'oxydation 8 et un filtre à particules 10. Après le filtre à particules la ligne d'échappement débouche à l'atmosphère.

Une dérivation 12 de recirculation des gaz d'échappement est montée entre la ligne d'échappement et les moyens d'admission d'air 2. Des moyens 14, par exemple une vanne, permettent de recycler les gaz d'échappement du moteur en entrée de celui-ci.

Les chambres de combustion du moteur diesel sont alimentées en carburant par des injecteurs 16 en nombre égal au nombre de cylindre du moteur. Ces injecteurs sont alimentés à partir d'une rampe d'injection commune 18. La rampe 18 est alimentée en carburant à partir d'un réservoir de carburant 20 par l'intermédiaire d'une pompe à haute pression 22. Un injecteur d'aide à la régénération du filtre à particules 10 est monté sur la ligne d'échappement entre le premier catalyseur d'oxydation et le second catalyseur d'oxydation 8. L'injecteur 24 peut être alimenté en carburant de deux façons. Soit son circuit d'alimentation est relié à la partie basse pression de la pompe HP 22 chargée d'établir la haute pression dans la rampe commune d'injection 18. Soit le circuit d'alimentation de l'injecteur est relié à une pompe électrique 26 qui puise directement le carburant dans le réservoir 20 du véhicule. De plus, l'injecteur 24 d'aide à la régénération du filtre à particules comprend un système de refroidissement (non représenté) relié au circuit d'eau de refroidissement du moteur.

Un calculateur 30 contrôle le fonctionnement du moteur. Le calculateur 30 a également pour fonction de définir le moment et la durée d'activation (quantité injectée) par l'injecteur 24 selon des informations reçues sur l'état de différents organes associés au moteur et à la régénération du filtre à particules. Les informations acquises par le calculateur de contrôle 30 sont avantageusement :
- la pression 32 dans la rampe commune d'injection 18 ;
- la température 34 avant le turbo compresseur 4 ;
- la température 36 avant le premier catalyseur d'oxydation 6 et la température 38 avant le second catalyseur 8 ;
- la température 40 avant le filtre à particules 10 ;
- la température 42 après le filtre à particules 10 ;
- la différence de pression entre l'entrée 44 du second catalyseur 8 et la sortie 46 du filtre à particules 10 ;
- le débit et la température 49 de l'air aspiré par le moteur.

Le calculateur de contrôle 30 contrôle le fonctionnement des moyens 2 d'admission d'air, des moyens 3 de recyclage des gaz d'échappement, du turbo compresseur 4. Il commande également la pompe à haute pression 22 et les injecteurs 16. Les moyens d'injection sont en outre adaptés pour déclencher une phase de régénération du filtre à particules 10 par combustion des particules piégées dans celui-ci en enclenchant une phase d'injection multiple de carburant dans les cylindres du moteur pendant la phase de détente.

Une sonde proportionnelle 48 est disposée en sortie du moteur 1 pour réguler le recyclage des gaz d'échappement en fonction de la teneur en oxygène de ces gaz lors de la phase de régénération du filtre à particules 10.

L'estimation du taux de saturation du filtre à particules 10 se fait à travers la mesure de la différence de pression entre l'entrée 44 du second catalyseur et la sortie 46 du filtre à particules. La demande d'activation de la régénération se fera lorsqu'un seuil limite pré-défini sera atteint.

L'injecteur 24 n'étant activé que sur les phases de régénération, et seulement sur certaines zones du plan régime/charge du moteur, il est assez peu utilisé pour certains types de roulages. Ainsi, le carburant résiduel contenu dans le volume intérieur de l'injecteur subira une dégradation qui dépendra de la température du carburant à l'intérieur de l'injecteur et de la durée d'inactivation dudit injecteur. C'est pourquoi l'invention propose un procédé de purge anti-encrassement de l'injecteur 24 et anti-vieillissement du carburant qui repose sur le diagnostic du degré de vieillissement du carburant. Ce procédé présente l'avantage de ne pas nécessiter l'emploi de capteurs supplémentaires. Les capteurs généralement utilisés pour le contrôle du moteur et des organes associés suffisent. L'invention présente par conséquent l'avantage d'être peu coûteuse à mettre en oeuvre.

Les facteurs ayant une influence d'ordre 1 sur le vieillissement du carburant dans l'injecteur 24 sont la température du corps d'injecteur et la température propre du carburant. La température du corps d'injecteur dépend au premier ordre de la température de peau, de la température des gaz d'échappement et de la température d'eau du circuit de refroidissement moteur. Quant à la température du carburant elle est dépendante au premier ordre de la pression de la rampe d'injection commune 18, du volume de carburant dans le réservoir 20 et de la pression du circuit basse pression.

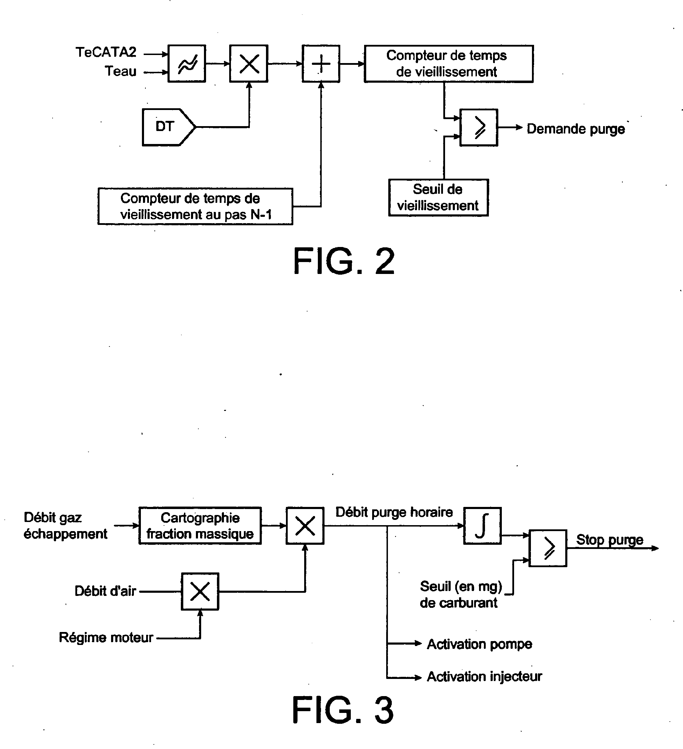

On a représenté sur la figure 2 un organigramme de l'estimation du temps de vieillissement du carburant.

L'architecture de la ligne d'échappement et l'implantation de l'injecteur 24 montrent que les informations disponibles et les plus propices à l'estimation du degré de vieillissement du carburant sont la température d'eau (Teau) du circuit du refroidissement moteur et la température (TeCATA2) des gaz d'échappement en entrée du second catalyseur 8. Le principe d'estimation du vieillissement du carburant intègre donc un temps (DT) corrigé par un facteur de vieillissement cartographié en fonction de Teau et de TeCaTa2 :

Compteur-vieillissement (N)=facteur-vieillissement (Teau, TeCATA2) x DT +compteur-vieillissement (N-1)

Au-delà, d'un temps maximum de vieillissement prédéfini, la stratégie fera une requête de purge :
Si
compteur-vieillissement (N)≥seuil-vieillessement-admissible
Alors,
Demande de purge activée.

La purge sera exécutée quand les conditions adéquates seront réunies. Le compteur de temps du vieillissement carburant sera réinitialisé après chaque purge réussie.

Une fois que le vieillissement du carburant est validé, il faut également vérifier qu'on n'est pas en mode de régénération du filtre à particules et que le second catalyseur d'oxydation 8 est amorcé, c'est-à-dire que la température à l'entrée de ce catalyseur est au moins de 350°C. Les conditions principales autorisant la purge et donc l'activation effective de l'injecteur sont donc :
- demande de purge active (vieillissement du carburant reconnu) ;
- mode de régénération du filtre à particules non actif ;
- TeCATA2 filtrée (température à l'entrée du filtre à particules supérieure à une température de seuil (T1) ;
- Qair_gaz filtré (débit d'air des gaz d'échappement) inférieur à un débit de seuil (Q1).

Le filtrage appliqué à TeCATA2 et à Qair_gaz est un filtrage du premier ordre du type exponentielle communément connu.

Par ailleurs il est nécessaire que la purge se mette en pause dès que les conditions d'entrée ne sont plus satisfaites. Le comptage de la quantité purgée reprendra là où il s'est arrêté quand les conditions seront à nouveau remplies.

On a représenté sur la figure 3 un organigramme de calcul du débit de purge et de l'arrêt de purge.

Comme on l'a expliqué précédemment, la purge est activée lorsqu'on est certain de ne pas avoir d'impact sur la ligne d'échappement. De plus, le débit de purge doit être maîtrisé et limité afin de ne pas perturber le cours normal du traitement des gaz brûlés dans l'échappement ce qui risquerait de conduire à une augmentation des émissions de polluants, à la destruction du filtre à particules ou des catalyseurs. Pour répondre à cette contrainte, le procédé de l'invention consiste à calculer le débit de purge (quantité de carburant injecté) en fonction du régime moteur, du débit d'air dans le moteur est d'une fraction massique défini selon le débit d'air des gaz d'échappement :

Débit de purge (N)= débit-airxrégime-moteurX fraction-massique (N)

La quantité effectivement purgée à l'étape N sera donnée par : Quantitée-purgée (N)= Débit-purge (N)+Quantité-purgée (N-1)

Quand la quantité total injectée correspondra là la quantité résiduelle de carburant effectivement à purger, l'arrêt purge sera demandé :
Si
Quantité-purgée (N)≥Quantité-de-carburant-à-purger (Qpurge)
Alors « Arrêt purge »

Par exemple pour un débit d'air d'environ 50kg/h au ralenti, le temps de renouvellement du gasoil contenu à l'intérieur de l'injecteur est d'environ 1 minute. Dans des conditions moins défavorables lorsque le débit d'air augmente, ce temps se réduit.

D'autre part, la régénération sera toujours prioritaire sur la purge. Toutefois la quantité de carburant (Qrégé) injectée dans la ligne d'échappement pour les besoins de la régénération du filtre à particules serra considéré comme participant à la purge :
Débit-purge (N) =Qrégé (N)

Et la quantité totale purgée à l'étape N sera donnée par :
Quantité-purgée (N)=Débit-purge (N)+Quantité-purgée (N-1)=Qrégé (N)+Quantité-purgée (N-1)

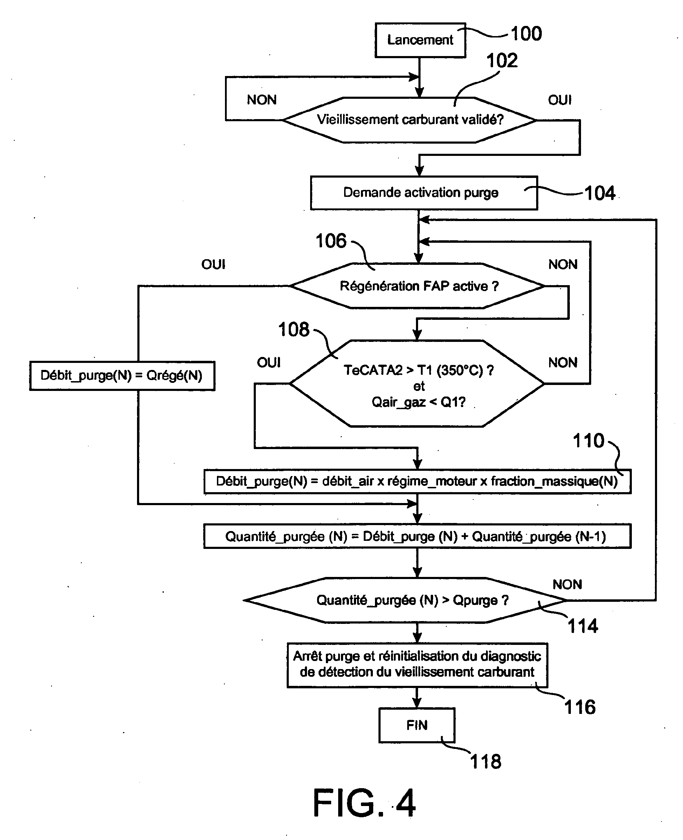

On a représenté sur la figure 4 un organigramme de gestion de la purge. A l'étape 100 on démarre le processus de gestion de la purge. A l'étape 102 on vérifie si le vieillissement de carburant est validé. Si c'est le cas, on active la demande de purge à l'étape 104. Dans la négative, le test est répété en boucle jusqu'à ce que une réponse positive soit obtenue. A l'étape 106 on test si la régénération du filtre à particules est active ou non. Dans l'affirmative, la purge ne peut pas être lancée. Toutefois, le débit de carburant de régénération est pris en compte dans le débit de purge. Dans la négative, c'est-à-dire quand la régénération du filtre à particules n'est pas active, il faut encore vérifier si d'autres conditions sont remplies par exemple si le second catalyseur est amorcé ce qui correspond à la condition TeCATA2 supérieure à T1 (par exemple 350°C) et si le débit d'air contenu dans les gaz d'échappement est inférieur à une valeur limite ce qui correspond à la condition Qair-gaz inférieur à Q1 à l'étape 108.

Si ces conditions ne sont pas satisfaites, la purge ne peut pas être lancée et l'on revient tester la régénération de l'activation du filtre à particules à l'étape 106. Dans l'affirmative les conditions sont satisfaites et le processus de purge peut débuter. On calcul alors le débit de purge à l'étape N à l'étape 110 par la formule :
Débit-purge(N)=débit-airXrégime-moteurXfraction-massique (N)

A l'étape 112 la quantité purgée à l'étape N est égalée au débit purgé à l'étape N augmentée de la quantité purgée à l'étape N-1. La quantité de carburant purgée pendant l'étape de régénération est prise en compte dans la quantité purgée à l'étape N. A l'étape 114, on teste si la quantité purgée a atteint une quantité à purger pré-définie. Dans la négative on revient tester l'activité de la régénération du filtre à particules à l'étape 106. Dans l'affirmative on arrête la purge et on réinitialise le diagnostic de détection de vieillissement de carburant à l'étape 116 et le processus prend fin à l'étape 118.

## Revendications

1. Procédé de purge d'un injecteur d'un système d'injection de carburant d'aide à la régénération d'un filtre à particules (10), **caractérisé en ce que** :
- on détermine le vieillissement du carburant, on le compare à une valeur de seuil de vieillissement de carburant et on active une demande de purge si cette valeur de seuil est dépassée ;
- lorsque la demande de purge est activée, on vérifie que des conditions d'activation de la purge sont satisfaites et, si elles le sont, on active la purge ;
- on poursuit la purge tant que les conditions sont satisfaites jusqu'à ce que la quantité de carburant purgée atteigne une quantité de carburant à purger (Qpurge).

2. Procédé selon la revendication 1, **caractérisé en ce qu'**on détermine un compteur du vieillissement du carburant à l'étape (N) en multipliant un facteur de vieillissement fonction de variables de vieillissement par un temps de vieillissement (DT) et en ajoutant le résultat obtenu au compteur de vieillissement à l'étape (N-1).

3. Procédé selon la revendication 2, **caractérisé en ce que** les variables de vieillissement sont la température de l'eau (Teau) et la température des gaz d'échappement (TeCATA2) à l'entrée d'un catalyseur (8) disposé en amont du filtre à particules (10).

4. Procédé selon l'une des revendications 1 à 3, **caractérisé en ce que** les conditions d'activation de la purge sont, outre le fait que la demande de purge est activée, le fait que le mode de régénération du filtre à particules (10) n'est pas actif, le fait que la température des gaz à l'entrée du filtre à particules est supérieure à une valeur de seuil (T1) et le fait que le débit d'air des gaz d'échappement est inférieur à un débit de seuil (Q1).

5. Procédé selon l'une des revendications 1 à 4, **caractérisé en ce que**, dans le cas où la purge est interrompue par une régénération du filtre à particules (10), la quantité de carburant (Qrégé) utilisé pour la régénération est considérée comme participant à la purge.

6. Système d'injection d'aide à la régénération d'un filtre à particules comprenant :
- un moteur (1) ;
- une ligne d'échappement sur laquelle sont disposés dans cet ordre, à partir du moteur (1), un premier catalyseur d'oxydation (6), un second catalyseur d'oxydation (8) et un filtre à particules (10) ; et
- un injecteur (24) d'aide à la régénération du filtre à particules (10) disposé entre le premier catalyseur d'oxydation (6) et le second catalyseur d'oxydation (8)
**caractérisé en ce que** le dit système comprend en outre des moyens (30, 38) de determination du vieillissement du carburant et un calculateur de contrôle (30) pour l'exécution du procédé de purge d'un injecteur selon l'une des quelconques revendications 1 à 5.

## Claims

1. Method for purging an injector in a fuel injection system used for the regeneration of a particulate filter (10), **characterized in that**:
- the aging of the fuel is determined, it is compared with a fuel aging threshold value and a purge request is activated if this threshold value is exceeded;
- when the purge request is activated, the meeting of the conditions for activating the purge is checked and, if they are met, the purge is activated;
- the purge is continued as long as these conditions are met, until the quantity of fuel purged reaches a quantity of fuel to be purged (Qpurge).

2. Method according to Claim 1, **characterized in that** a fuel aging counter is determined at step (N) by multiplying an aging factor based on aging variables by an aging time (DT) and adding the result obtained to the aging counter at step (N-1).

3. Method according to Claim 2, **characterized in that** the aging variables are the temperature of the water (Teau) and the temperature of the exhaust gases (TeCATA2) at the inlet of a catalytic converter (8) disposed upstream of the particulate filter (10).

4. Method according to one of Claims 1 to 3, **characterized in that** the conditions for activating the purge are, in addition to the fact that the purge request is activated, the fact that the regeneration mode of the particulate filter (10) is not active, the fact that the temperature of the gases at the inlet of the particulate filter is higher than a threshold value (T1) and the fact that the amount of air in the exhaust gases is lower than a threshold amount (Q1).

5. Method according to one of Claims 1 to 4, **characterized in that**, if the purge is interrupted by a regeneration of the particulate filter (10), the quantity of fuel (Qrégé) used for the regeneration is considered as contributing to the purge.

6. Injection system used for the regeneration of a particulate filter comprising:
- an engine (1);
- an exhaust pipe on which are disposed in this order, starting from the engine (1), a first oxidizing catalytic converter (6), a second oxidizing catalytic converter (8) and a particulate filter (10); and
- an injector (24) used for the regeneration of the particulate filter (10), which is disposed between the first oxidizing catalytic converter (6) and the second oxidizing catalytic converter (8), **characterized in that** the said system further comprises means (30, 38) for determining the aging of the fuel and an ECU (30) for running the injector purging method according to any one of Claims 1 to 5.

## Patentansprüche

1. Verfahren zum Durchblasen einer Einspritzdüse eines Kraftstoffeinspritzsystems zur Unterstützung der Regeneration eines Partikelfilters (10), **dadurch gekennzeichnet, dass**:
- die Alterung des Kraftstoffs bestimmt wird, mit einem Kraftstoffalterungs-Schwellwert verglichen wird, und eine Durchblasanforderung aktiviert wird, wenn dieser Schwellwert überschritten ist;
- wenn die Durchblasanforderung aktiviert ist, geprüft wird, dass Aktivierungsbedingungen des Durchblasens erfüllt sind, und wenn sie es sind, das Durchblasen aktiviert wird;
- das Durchblasen fortgesetzt wird, so lange die Bedingungen erfüllt sind, bis die Menge an durchgeblasenem Kraftstoff eine Menge an durchzublasendem Kraftstoff erreicht (Qpurge).

2. Verfahren nach Anspruch 1, **dadurch gekennzeichnet, dass** ein Zähler der Alterung des Kraftstoffs im Schritt (N) bestimmt wird, indem ein von Alterungsvariablen abhängiger Alterungsfaktor mit einer Alterungszeit (DT) multipliziert wird, und indem das erhaltene Ergebnis dem Alterungszähler im Schritt (N-1) hinzugefügt wird.

3. Verfahren nach Anspruch 2, **dadurch gekennzeichnet, dass** die Alterungsvariablen die Wassertemperatur (Teau) und die Abgastemperatur (TeCATA2) am Eingang eines Katalysators (8) sind, der vor dem Partikelfilter (10) angeordnet ist.

4. Verfahren nach einem der Ansprüche 1 bis 3, **dadurch gekennzeichnet, dass** die Aktivierungsbedingungen des Durchblasens außer der Tatsache, dass die Durchblasanforderung aktiviert ist, die Tatsache, dass die Regenerationsbetriebsart des Partikelfilters (10) nicht aktiv ist, die Tatsache, dass die Temperatur der Gase am Eingang des Partikelfilters höher als ein Schwellwert (T1) ist, und die Tatsache sind, dass der Luftdurchsatz der Abgase geringer als ein Schwelldurchsatz (Q1) ist.

5. Verfahren nach einem der Ansprüche 1 bis 4, **dadurch gekennzeichnet, dass** in dem Fall, in dem das Durchblasen durch eine Regeneration des Partikelfilters (10) unterbrochen wird, die Menge von zur Regeneration verwendetem Kraftstoff (Qrégé) als am Durchblasen mitwirkend angesehen wird.

6. Einspritzsystem zur Unterstützung der Regeneration eines Partikelfilters, das enthält.
- einen Motor (1);
- eine Auspuffanlage, in der in dieser Reihenfolge ausgehend von dem Motor (1) ein erster Oxidationskatalysator (6), ein zweiter Oxidationskatalysator (8) und ein Partikelfilter (10) angeordnet sind; und
- eine Einspritzdüse (24) zur Unterstützung der Regeneration des Partikelfilters (10), die zwischen dem ersten Oxidationskatalysator (6) und dem zweiten Oxidationskatalysator (8) angeordnet ist,
**dadurch gekennzeichnet, dass** das System außerdem Einrichtungen (30, 38) zur Bestimmung der Alterung des Kraftstoffs und einen Kontrollrechner (30) zur Ausführung des Durchblasverfahrens einer Einspritzdüse nach einem der Ansprüche 1 bis 5 enthält.
